# EUROPEAN PATENT APPLICATION

(11) **EP 1 118 604 A2**
(43) Date of publication of application: **25.07.2001**
(21) Application number: 01300498.1
(22) Date of filing: 19.01.2001
(51) Int. Cl.: C05F 17/02, C05F 9/04

(54) **Method of composting and container therefor**

(30) Priority: 21.01.2000 GB 0001267
(71) Applicant: West, Edward Victor, Enfield, Essex EN3 6TS (GB)
(72) Inventor: West, Edward Victor, Enfield, Essex EN3 6TS (GB)
(74) Representative: Hutchins, Michael Richard

(57) **Abstract**

A container for composting material includes first and second chambers (17, 18), the second chamber (18) being located below said first chamber (17). A divider (15), when in a closed position, divides the first chamber (17) from the second chamber (18) and can be moved to an open position to transfer decomposing material (23) from the first chamber to the second chamber by permitting the material to fall from the first chamber to the second chamber. It is preferred to provide a container having three chambers (17, 18, 19) located one above another, the chambers each being separated from an adjacent chamber by a removable dividing wall (15, 16), material (23) for composting being introduced into the uppermost chamber (17) and composted material being removed from the lowermost chamber (19).

## Description

This invention relates to composting of waste vegetable and similar material to produce a decomposed end-product suitable for incorporation with the soil or for surface application to the soil as a mulch in which plants are to be grown. In particular the invention relates to a method of composting the material and to a container constructed to contain the material during the process of decomposition thereof.

Various forms of container are known for containing material to be composted in a decomposition process. One form of container comprises a rectangular bin consisting of three fixed walls and a front wall formed of removable boards. Initially when the bin is empty, the boards are positioned to close the front of the bin. Waste material to be composted is placed in the bin together with, if desired, a material to accelerate the decomposition of the material. If the bin is not filled in one operation, further waste material may be placed in the bin on top of the material previously placed in the bin. Over a period of time the material in the bin decomposes and, dependent upon the type of waste material, the material may decompose to a peat like constitution without further attention. However the material may decompose unevenly particularly if the waste material includes a combination of soft sappy vegetable matter such as grass cuttings collected from lawn mowing and household vegetable waste and harder more fibrous matter such as hedge clippings and prunings from shrubs and trees.

Usually there is insufficient waste material available at any one time to fill the bin and therefore waste material is added to the bin over a period of time. The material originally placed in the bin will be more decomposed than material more recently placed in the bin. It will be appreciated that the material that has decomposed to a greater extent is situated at the bottom of the bin and relatively un-decomposed material is situated at the top of the bin. Accordingly if it desired to remove material that has decomposed to an extent sufficient for use on the soil, it must be removed from the bottom of the heap of material in the bin. This may be facilitated by removing the boards that close the front of the container to expose the lowermost part of the heap. However as the fully decomposed material is removed from the bottom of the heap, the remainder of the material in the bin tends to collapse downward and, in collapsing, fresher material which is not decomposed or only partially decomposed becomes mixed with the fully decomposed material. As a result it is difficult to retrieve fully decomposed material without it being contaminated with fresher partially decomposed material.

According to one aspect of the invention a method of composting material includes the steps of providing a container having a first chamber located above a second chamber, retaining first material to be composted in the first chamber; transferring the first material to the second chamber by permitting the first material in the first chamber to fall into the second chamber; retaining second material to be composted in the first chamber until the first material has been removed from the second chamber and then transferring the second material from the first chamber to the second chamber by permitting the second material to fall into the second chamber.

According to a second aspect of the invention a container for composting material includes a first chamber; a second chamber located below said first chamber; divider means dividing said first chamber from the second chamber; said divider means being movable to effect transfer of decomposing material from the first chamber to the second chamber by permitting the material to fall from the first chamber to the second chamber.

According to a third aspect of invention a container for composting material comprises front, rear and side walls enclosing a space open at a top end of the container for introducing material to be composted in the container; and a divider having a first position dividing said space into a first chamber adjacent the top end of the container and a second chamber located below said first chamber; said divider being movable from said closed position to an open position to permit communication between the first and second chambers; said divider being effective when in the closed position to retain material introduced into the top end of the container in the first chamber and when in the open position to permit the material to fall into the second chamber.

An embodiment of the invention will now be described by way of example with reference to the drawings in which:-
- Figure 1: is a front elevation of a compost container in accordance with the invention,
- Figure 2: is a side elevation of the compost container,
- Figure 3: is a sectional view on the line 3 - 3 of Figure 1, but showing a lid of the container in an open position
- Figure 4: is a sectional view similar to that of Figure 3 but with an upper divider of the container opened,
- Figure 5: is a sectional view similar to that of Figure 3 after transfer of composting material from an upper chamber to an intermediate chamber,
- Figure 6: is a sectional view similar to that of Figure 4 but with the upper divider closed and a lower divider opened,
- Figure 7: is a plan view of the upper divider of the compost container, and
- Figure 8: is a plan view of the lower divider of the compost container.

Referring to the drawings, a container for composting waste material is constructed in the form of a rectangular open topped bin having a front wall 10, a rear wall 11 and side walls 12 of which only one side wall 12 is shown in the drawings. A lid 13 is secured to an upper edge of the rear wall by a hinge 14.

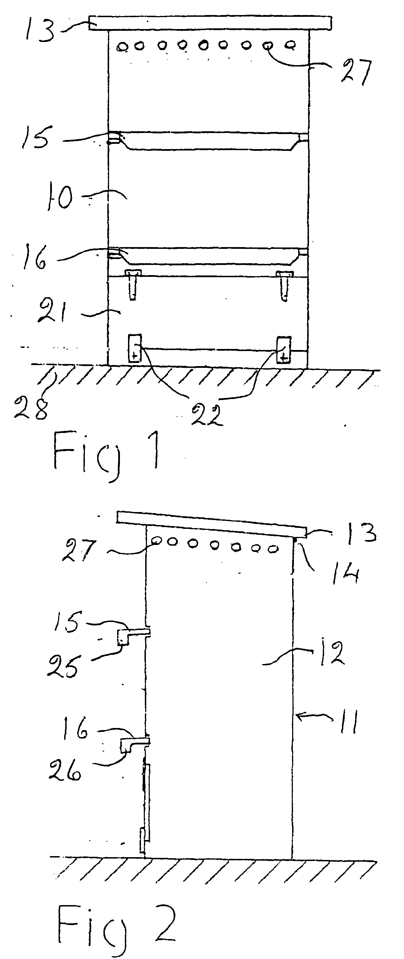

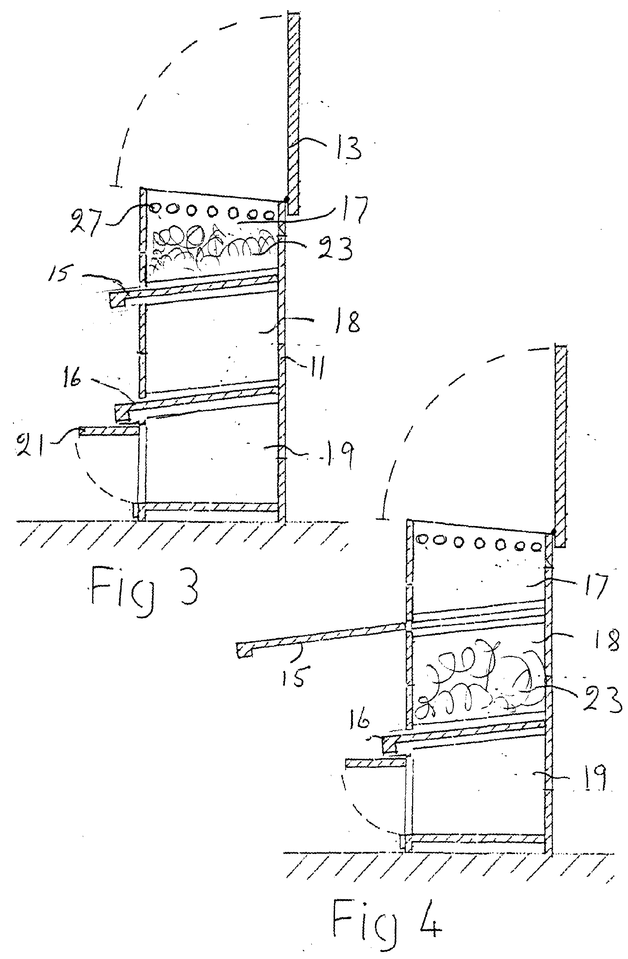

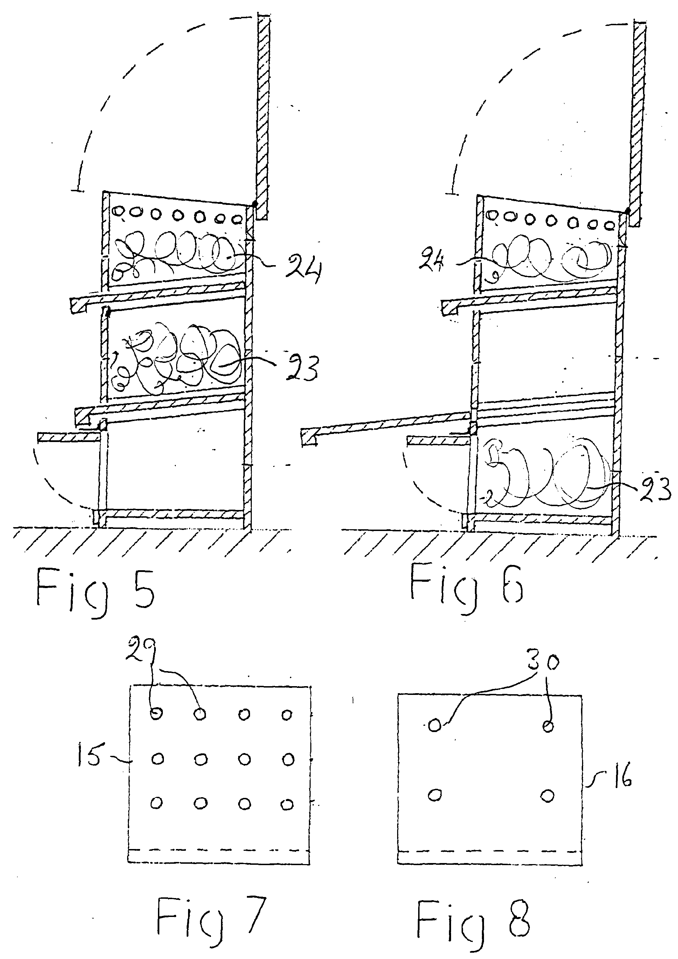

The bin is divided by upper and lower dividers 15, 16, extending in a generally horizontal direction, into an upper chamber 17, an intermediate chamber 18 and a lower chamber 19 located one above another. The dividers 15 and 16 are movable between closed positions as shown in Figure 3 in which the dividers divide the bin into the chambers 17, 18 and 19 and open positions in which there is communication between the chambers 17, 18 as shown in Figure 4 or between chambers 18, 19 as shown in Figure 6.
Conveniently the dividers are supported in slides 20 whereby the dividers may be moved by sliding between the open and closed positions. As shown, the dividers extend out of the bin through slots in the front wall. The front wall 10 includes a flap 21 which may be opened, as shown in Figure 4, to provide access to the lower chamber 19. Toggles 22 or other fastening means are provided to retain the flap 21 in a closed position as shown in Figure 1.

Generally the waste material to be composted and decomposed in the compost container comprises household vegetable waste and waste plant material from a garden. Initially when the compost container is to be used to decompose this waste material, the dividers 15, 16 are fully inserted into the bin to the closed positions thereof as shown in Figure 3. Waste material 23 is put into the top of the bin, with the lid 13 opened, and this waste material 23 is retained in the upper chamber 17 by the upper divider 15 which forms a floor to the upper chamber 17. As additional waste material is obtained this too is placed into the top of the bin and is retained in the upper chamber 17. Preferably the material is roughly in layers and a composting activator is distributed over each layer as the waste material is placed in the bin. It is preferred to distribute the composting activator as each depth of approximately 10cm of waste material is built up in the upper chamber. During accumulation of the waste material and compost activator in the upper chamber, the waste material will start to decompose. When the upper chamber is filled with waste material 23, the upper divider 15 is withdrawn as shown in Figure 4 and the material 23, accumulated in the upper chamber and which is now partially decomposed, falls into the intermediate chamber 18 and is retained in the intermediate chamber 18 by the lower divider 16 as shown in Figure 4. Thus the opening of the upper divider 15 results in the material 23 accumulated in the upper chamber being transferred from the upper chamber to the intermediate chamber thereby leaving the upper chamber empty. The partially composted material 23 that is now situated in the intermediate chamber continues to decompose. Upon closing the upper divider, the upper chamber is ready to receive fresh waste material for composting.

With the upper divider 15 closed to again divide the upper chamber from the intermediate chamber, as shown in Figure 5, the upper chamber is ready to receive further waste material 24 as described hereinbefore. It will be appreciated that the divider 15 between the intermediate and upper chambers maintains the freshly added waste material 24 separated from the partially decomposed material 23 in the intermediate chamber.

When the upper chamber has again been filled with freshly added waste material, the lower divider 16 is opened as shown in Figure 6 to allow the partially decomposed material 23 in the intermediate chamber to fall into the lower chamber and thereby leave the intermediate chamber empty. Then the lower divider is closed to divide the intermediate chamber from the lower chamber. After the lower divider has been closed, the upper divider is opened, as in Figure 4, to allow the waste material in the upper chamber to fall into the intermediate chamber and thereby leave the upper chamber empty. Then the upper divider is closed to divide the upper chamber from the intermediate chamber and once again the upper chamber is ready to receive further fresh waste material.

It will be appreciated that at this stage, waste material 23 that has decomposed to the greatest extent is situated in the lower chamber 19, waste material 24 that has decomposed to a lesser extent is situated in the intermediate chamber 18 and fresh waste material that is only starting to decompose is being accumulated in the upper chamber 17.

Decomposed material 23 in the lower chamber may be removed from the lower chamber by opening the flap 20 thereby permitting access for a spade or shovel which can be used to remove the decomposed material. After removal of the decomposed material from the lower chamber, a further transfer of material may be effected from the intermediate chamber to the lower chamber by opening the lower divider followed by closing the lower divider and then transferring material from the upper chamber to the intermediate chamber by opening the upper divider. After closing the upper divider, the upper chamber is ready to receive further waste material for composting. Thus the composting process comprises accumulating batches of material in the upper chamber and then in a series of steps transferring each batch of accumulated material downwards through the series of chambers 17, 18 and 19 and removing composted material from the lower chamber. It is desirable that the dimensions of the chambers of the bin are sufficiently large to contain the material at each stage such that there is sufficient time for material transferred into the lower chamber to reach a required state of decomposition by the time that the upper chamber has been re-filled with fresh waste material.

It will be appreciated that at each stage material is transferred from one chamber to a next succeeding lower chamber, the material that is transferred is kept separated from any material that is more decomposed as well as from any material that is less decomposed. During composting of waste material it is often recommended that the material is disturbed periodically to redistribute the material so as to inhibit parts of the material becoming too wet and other parts of the material becoming too dry. When the material is allowed to fall from one chamber to the next chamber, the material is disturbed to some extent and tends to be redistributed when it settles in the next chamber.

The dividers 15 and 16 are opened by withdrawing the dividers from the interior of the bin through corresponding slots in the front wall 10. The dividers 15, 16 are provided with handles 25, 26 respectively. Conveniently the handles may be formed as a bar extending along a front edge of the divider and the front edge of the divider and the bar forming the handle are disposed outside the bin when the divider is closed. In order to prevent ingress of rain to the interior of the bin, the lid 13 extends over and beyond the upper edge of the front wall 10, the rear wall 11 and the side walls 12 and the dividers are each disposed to slope with the front edges thereof lowermost. The slope of the dividers causes any rain falling on the part of the dividers lying outside the bin to drain away from the bin. Preferably the upper divider extends further from the front wall than the lower divider, and the roof extends beyond the front wall to a greater extent than the upper divider. Accordingly rain dripping from the roof does not fall on the upper divider and rain dripping from the upper divider does not fall on the lower divider.

During the decomposition of the waste material, the material becomes heated and water vapour is given off. At least one or more of the walls 10, 11 and 12 are provided with apertures 27 adjacent the upper edges thereof to allow ventilation of excess water vapour to the outside of the bin. As shown in Figures 7 and 8 the dividers 15 and 16 are provided with apertures 29, 30 to permit heat and water vapour to rise through the material contained in the chambers of the bin. It has been found preferable to provide a greater area of apertures in the upper divider 15 than in the lower divider 16. This may be effected by providing similarly sized apertures in each divider but providing a larger number of apertures 29 in the upper divider than the number of apertures 30 in the lower divider as shown in Figures 7, 8.

While it is preferred to provide a bin which is divided into three chambers as hereinbefore described, it will be appreciated that if desired the bin may be divided into only two chambers or into a larger number of chambers. Conveniently the bin may be constructed of timber and be of rectangular form. However the bin may be constructed of other materials and be of other shape or form.

The bin may be provided with a floor 27 or the bin may be open at the bottom and material in the lower chamber 19 will be in contact with the soil 28 on which the bin stands.

## Claims

1. A method of composting material characterised by the steps of providing a container (10) having a first chamber (17) located above a second chamber (18), retaining first material (23) to be composted in the first chamber; transferring the first material (23) to the second chamber by permitting the first material in the first chamber to fall into the second chamber; thereafter retaining second material (24) to be composted in the first chamber (17) until the first material (23) has been removed from the second chamber (18) and then transferring the second material (24) from the first chamber (17) to the second chamber (18) by permitting the second material (24) to fall into the second chamber (18).

2. A method as claimed in claim 1 wherein the container includes a third chamber (19) located below said second chamber (18) and the step of removing the first material (23) comprises permitting the first material to fall into the third chamber (19).

3. A container for composting material including a first chamber (17) charactersied by a second chamber (18) located below said first chamber (17); first divider means (15) dividing said first chamber (17) from the second chamber (18); said first divider means (15) being movable to effect transfer of decomposing material from the first chamber (17) to the second chamber (18) by permitting the material (23) to fall from the first chamber (17) to the second chamber (18).

4. A container as claimed in claim 3 wherein said first divider means (15) has a first closed position effective to separate the second chamber (18) from the first chamber (17) and said first divider means (15) has a first open position effective to enable communication between the first chamber (17) and the second chamber (18).

5. A container for composting material as claimed in claim 3 or 4 including a third chamber (19) located below said second chamber (18); second divider means (16) dividing said second chamber (18) from the third chamber (19); said second divider means (16) being movable to effect transfer of decomposing material (23) from the second chamber (18) to the third chamber (19).

6. A container as claimed in claim 3, 4 or 5 wherein the first divider means (15) comprises a first planar divider wall movable in the plane of the divider wall between closed and open positions.

7. A container as claimed in claim 5 wherein said second dividing means (16) comprises a second planar divider wall movable in the plane of the second divider wall between closed and open positions.

8. A container for composting material comprising:-
front (10), rear (11) and side (12) walls enclosing a space open at a top end of the container for introducing material (23) to be composted in the container; characterised by a divider (15) having a closed position dividing said space into a first chamber (17) adjacent the top end of the container and a second chamber (18) located below said first chamber (18); said divider (15) being movable from said closed position to an open position to permit communication between the first and second chambers; said divider being effective when in the closed position to retain material introduced into the top end of the container in the first chamber (17) and when in the open position to permit the material (23) to fall into the second chamber (18).

9. A container as claimed in claim in any one of claims 3 to 8 including a roof member (13) closing the open top of the container and openable to enable introduction of material (23) for composting into said first chamber (17).
